# EUROPÄISCHE PATENTSCHRIFT

(11) **EP 4 017 781 B1**
(45) Veröffentlichungstag und Bekanntmachung des Hinweises auf die Patenterteilung: **13.03.2024**
(21) Anmeldenummer: 20754726.6
(22) Anmeldetag: 11.08.2020
(51) Int. Cl.: B62D 1/181, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 20.08.2019 DE 102019212435
(43) Veröffentlichungstag der Anmeldung: 29.06.2022
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2020/072441
(87) Internationale Veröffentlichungsnummer: WO 2021/032525

(56) Entgegenhaltungen:
- JP-A- 2007 125 956
- JP-A- 2008 056 132
- US-A1- 2004 041 388

## Beschreibung

### Stand der Technik

Die Erfindung betrifft einen Verstellantrieb für eine Lenksäule für ein Kraftfahrzeug, umfassend eine sich in Richtung einer Spindelachse erstreckende Gewindespindel, die mit einem Außengewinde in eine Spindelmutter eingreift, und einen Antriebsmotor, der mit der Gewindespindel oder der Spindelmutter derart gekoppelt ist, dass die Spindelmutter und die Gewindespindel relativ zueinander drehend antreibbar sind, und eine Energieabsorptionsvorrichtung, die ausgebildet ist zur Absorption von in Richtung der Spindelachse auf den Verstellantrieb einwirkender kinetischer Energie, wobei die Gewindespindel die Energieabsorptionsvorrichtung aufweist, und wobei die Gewindespindel ein Wellrohr aufweist. Eine verstellbare Lenksäule mit einem derartigen Verstellantrieb ist ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass ein Innenmantelrohr der Stelleinheit, auch kurz als Mantelrohr bezeichnet, in einer mit der Trageinheit verbundenen Manteleinheit, auch als Führungskasten, Außenmantelrohr oder Kastenschwinge bezeichnet, in Richtung der Längsachse teleskopartig verschiebbar aufgenommen ist, kann eine Längenverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur räumlichen Verstellung der Stelleinheit relativ zur Trageinheit einen motorischen Verstellantrieb mit einem elektrischen Antriebsmotor vorzusehen, der - in der Regel über ein Getriebe - mit einem Spindeltrieb verbunden ist, der eine in eine Spindelmutter eingeschraubte Gewindespindel umfasst. Durch den Antriebsmotor sind die Gewindespindel und die Spindelmutter gegeneinander um die Spindelachse (Gewindespindelachse) relativ zueinander drehend antreibbar, wodurch diese je nach Drehrichtung translatorisch aufeinander zu oder voneinander weg bewegt werden können. In einer Ausführungsform, einem sogenannten Rotationsspindeltrieb, ist die Gewindespindel von der Antriebseinheit, die mittels ihres Koppelabschnitts mit der Stelleinheit oder der Trageinheit verbunden ist, drehend antreibbar und greift in die Spindelmutter ein, die an der Trageinheit oder der Stelleinheit bezüglich Drehung um die Spindelachse feststehend angebracht ist. In Richtung der Spindelachse stützt sich die Gewindespindel über den Koppelabschnitt an der Trageinheit oder der Stelleinheit ab, und die Spindelmutter über eine Halterung entsprechend an der Stelleinheit oder der Trageinheit, so dass ein rotatorischer Antrieb der Gewindespindel eine translatorische Verstellung von Trageinheit und Stelleinheit relativ zueinander bewirkt. In einer alternativen Ausführungsform, die als Tauchspindeltrieb bezeichnet wird, ist die Gewindespindel mit ihrem Koppelabschnitt bezüglich Drehung um ihre Spindelachse unverdrehbar mit der Trageinheit oder der Stelleinheit gekoppelt und die Spindelmutter ist drehbar, aber in Richtung der Gewindespindelachse feststehend in der Halterung an der Stelleinheit oder der Trageinheit gelagert. Wie in der ersten Ausführungsform stützt sich die Gewindespindel über den Koppelabschnitt in Richtung der Spindelachse an der Trageinheit oder der Stelleinheit ab, und die Spindelmutter entsprechend an der Stelleinheit oder der Trageinheit, so dass die Gewindespindel durch drehenden Antrieb in Richtung der Spindelachse translatorisch verschiebbar ist. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann ein Spindeltrieb eines Verstellantriebs zwischen dem Mantelrohr der Stelleinheit und einer dieses axial längsverschieblich aufnehmenden Manteleinheit angeordnet sein, welche mit der Trageinheit verbunden ist, und wobei die Spindelachse im Wesentlichen parallel zur Längsachse ausgerichtet sein kann.

Zur Höhenverstellung kann ein Verstellantrieb zwischen der Trageinheit und einer daran höhenverschwenkbar gelagerten Stelleinheit angeordnet sein. An einer Lenksäule können eine motorische Längs- und Höhenverstellung einzeln oder in Kombination ausgebildet sein.

Zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, zwischen den relativ zueinander verstellbaren Elementen der Trag- und Stelleinheit eine Energieabsorptionsvorrichtung einzukoppeln, die auch als Crasheinrichtung bezeichnet wird. Diese absorbiert die im Crashfall eingeleitete kinetische Energie in einem Energieabsorptionselement, beispielsweise durch plastische Verformung eines Deformationselements, wie in an sich bekannter Weise durch Aufreißen einer Reißlasche oder Verbiegen eines Biegeelements, etwa eines Biegedrahts oder Biegestreifens, und zusätzlich oder alternativ durch Reibung in einer Friktionsvorrichtung. Dadurch kann eine kontrollierte Abbremsung des auf das Lenkrad auftreffenden Körpers erfolgen.

Es ist bekannt, die Energieabsorptionsvorrichtung in den oder die Verstellantriebe zu integrieren. Bei einem Spindeltrieb der eingangs genannten Art wird im Crashfall die Energie in Richtung der Spindelachse eingekoppelt. In der DE 102 59 596 B3 wird hierzu vorgeschlagen, die Spindelmutter an der Lenksäule über ein in Richtung der Spindelachse wirksames Energieabsorptionselement anzubringen. Eine funktional vergleichbare Kombination eines Verstellantreibs mit einer Energieabsorptionsvorrichtung ist aus der DE 10 2018 204 735 A1 bekannt. Nachteilig ist am dem Stand der Technik, dass die Baugröße des Verstellantriebs durch den erforderlichen Deformationsweg der Energieabsorptionsvorrichtung vergrößert wird. Außerdem ist der Fertigungs- und Montageaufwand hoch.

Ein Verstellantrieb der eingangs genannten Art ist aus der US 2004/0041388 A1 bekannt. Dieser weist eine Gewindespindel mit einem Außengewinde auf, zu dem axial beabstandet ein Wellrohr angeordnet ist, welches unter Energieabsorption axial deformierbar ist. Diese Bauform ist relativ aufwendig und beansprucht einen relativ großen Bauraum.

Angesichts der vorangehend erläuterten Problematik ist es eine Aufgabe der vorliegenden Erfindung, einen Verstellantrieb mit Energieabsorptionsfunktion bereitzustellen, der eine kompaktere Bauform hat und einen geringeren Aufwand erfordert.

### Darstellung der Erfindung

Diese Aufgabe wird erfindungsgemäß gelöst durch einen Verstellantrieb mit den Merkmalen des Anspruchs 1 und eine Lenksäule gemäß Anspruch 17. Vorteilhafte Weiterbildungen ergeben sich aus den Unteransprüchen.

Bei einem Verstellantrieb für eine Lenksäule für ein Kraftfahrzeug, umfassend eine sich in Richtung einer Spindelachse erstreckende Gewindespindel, die mit einem Außengewinde in eine Spindelmutter eingreift, und einen Antriebsmotor, der mit der Gewindespindel oder der Spindelmutter derart gekoppelt ist, dass die Spindelmutter und die Gewindespindel relativ zueinander drehend antreibbar sind, und eine Energieabsorptionsvorrichtung, die ausgebildet ist zur Absorption von in Richtung der Spindelachse auf den Verstellantrieb einwirkender kinetischer Energie, wobei die Gewindespindel die Energieabsorptionsvorrichtung aufweist, und wobei die Gewindespindel ein Wellrohr aufweist, ist erfindungsgemäß vorgesehen, dass das Wellrohr das Außengewinde aufweist.

Bei der Erfindung ist die Energieabsorptionsvorrichtung mit der Gewindespindel integriert ausgebildet ist, d.h. sie bildet einen integralen Bestandteil der Gewindespindel. Die hohe kinetische Energie, die im Crashfall von der Spindelmutter über das Außengewinde in die Gewindespindel eingeleitet wird, die sich - bevorzugt über einen Koppelabschnitt an dem der Spindelmutter abgewandten Endbereich der Gewindespindel - axial, d.h. in Richtung der Spindelachse abstützt, wird in der Gewindespindel absorbiert, bevorzugt durch Umwandlung in Verformungsarbeit und Wärme. Gemäß der Erfindung hat die Gewindespindel entsprechend eine Doppelfunktion, sie dient nämlich zur translatorischen Verstellung und gleichzeitig zur Energieabsorption.

Im Crashfall wird die in die Lenkspindel eingebrachte kinetische Energie auf den oder die Verstellantriebe eingeleitet, die zwischen der Trageinheit und der Manteleinheit, und zusätzlich oder alternativ zwischen der Manteleinheit und der darin teleskopartig verstellbar aufgenommenen Stelleinheit eingegliedert sein können. Über den Koppelabschnitt bzw. das Koppelelement der Gewindespindel und die Halterung der Spindelmutter wirkt die die Energie in Richtung der Spindelachse auf die Gewindespindel übertragen, und wird in deren erfindungsgemäß integrierter Energieabsorptionsvorrichtung absorbiert, d.h. in Verformungsarbeit und/oder Wärme umgesetzt.

Die Gewindespindel weist ein Wellrohr auf bzw. ist zumindest teilweise als ein solches ausgebildet. Unter einem Wellrohr wird im Folgenden ein Rohr verstanden, welches zumindest abschnittweise einen in axialer Richtung, d.h. in Richtung der Spindelachse, gesehen eine Rohrwandung mit wellenförmigen Querschnitt aufweist. Dabei ist erfindungsgemäß vorgesehen, dass das Wellrohr mindestens eine schraubenförmig umlaufende Einformung der Rohrwandung aufweist, wodurch außen ein Außengewinde und innen ein Innengewinde gebildet wird. Diese Ausführung wird im Folgenden auch als Gewindebalg, Gewindebalgrohr, Gewindefaltenbalg, Schraubenbalg oder Schraubenbalgrohr bezeichnet. Alternativ kann ein Wellrohr auch eine Mehrzahl von axial aufeinanderfolgenden, zueinander parallelen, jeweils zumindest abschnittweise ringförmig umlaufenden Einformungen aufweisen, wodurch eine Zieharmonika-artige Balgform gebildet wird.

Durch die Wellen der Rohrwandung kann ein Wellrohr axial gestaucht oder gedehnt werden, wobei die Wellen axial zusammengebogen oder gestreckt werden, aber die koaxiale Ausrichtung im Wesentlichen erhalten bleiben kann, also insbesondere ohne seitliches Ausknicken. Dabei ist im Folgenden ist mit der axialen Richtung immer die Spindelrichtung der Gewindespindel bezeichnet.

Eine axiale Stauchung oder Dehnung eines Wellrohrs in Spindelrichtung erzeugt - bedingt durch die Eigenschaften des Materials - eine plastische Deformation. Bei der Erfindung wird diese Eigenschaft dazu genutzt, das Wellrohr als Energieabsorptionselement einzusetzen.

Das Wellrohr ist koaxial mit der Gewindespindel angeordnet, wodurch der Vorteil realisiert werden kann, dass es als Energieabsorptionselement in die Gewindespindel integriert ist. Eine in axialer Richtung, d.h. in Richtung der Spindelachse, auf die Gewindespindel einwirkende Crashkraft bewirkt eine axiale Deformation des Wellrohrs, wodurch Energie absorbiert wird. Dadurch wird eine kompakte Bauform des Verstellantriebs mit integrierter Energieabsorptionsvorrichtung ermöglicht. Dabei kann ein Wellrohr rationell mit den erforderlichen Abmessungen und Eigenschaften gefertigt werden, beispielsweise aus einem metallischen Werkstoff, bevorzugt aus Stahl, oder auch einem Kunststoff oder Materialkombinationen.

Erfindungsgemäß ist vorgesehen, dass das Wellrohr das Außengewinde aufweist. Dies wird dadurch erreicht, dass das Wellrohr gemäß vorangehender Definition als Gewindebalg, Gewindebalgrohr, Gewindefaltenbalg, Schraubenbalg bzw. Schraubenbalgrohr ausgebildet ist, wobei die Begriffe synonym verwendet werden. Auf seiner Außenseite kann das Wellrohr dadurch das Außengewinde der Gewindespindel aufweisen, welches in die Spindelmutter eingeschraubt ist. Dadurch wird ermöglich, das das Wellrohr zumindest abschnittweise die Gewindespindel bildet, oder ein Gewindeelement einer zweiteiligen Gewindespindel, wie die oben beschriebene Gewindehülse, die auf einem Kernelement angebracht ist.

Besonders vorteilhaft sowohl im Hinblick auf eine kompakte Bauform, als auch bezüglich einer rationellen Konstruktion und Fertigung ist, dass das Wellrohr erfindungsgemäß eine zweifache Funktion als Antriebselement des Spindeltriebs und gleichzeitig als Energieabsorptionselement hat. Der Abschnitt des Wellrohrs, der sich nicht in die Spindelmutter eingeschraubt befindet, steht für eine axiale plastische Verformung, bevorzugt eine Stauchung, zur Energieabsorption in Richtung der Spindelachse zur Verfügung.

Das Wellrohr kann einstückig die Gewindespindel, oder zumindest einen Abschnitt der Gewindespindel bilden. Es ist auch eine Ausführung denkbar und möglich, bei der das Wellrohr koaxial auf einem Kernelement angeordnet ist. Dadurch wird die Gewindehülse der weiter oben beschriebenen zweiteiligen, aus Gewinde- und Kernelement zusammengesetzten Anordnung durch ein Wellrohr gebildet. Das Wellrohr kann sich dann an einem Endbereich an dem Kernelement abstützen, vorzugsweise an einem seiner beiden Endbereiche, oder auch an beiden Endbereichen. In Crashfall wird das Wellrohr zwischen der Spindelmutter und dem abgestützten Endbereich plastisch gestaucht, oder gedehnt, wobei es auf dem Kernelement axial gleitet und geführt wird.

Das Wellrohr kann den Koppelabschnitt aufweisen, oder mit diesem verbunden sein, zur Verbindung mit der Lenksäule.

Dadurch, dass das Wellrohr als Gewindebalg ausgebildet ist, kann es einen Innengewindeabschnitt aufweisen. In diesen Innengewindeabschnitt kann beispielsweise ein Kernelement eingeschraubt sein, wodurch eine einfache und sichere Befestigungsmöglichkeit besteht. Außerdem ist es möglich, dass das Kernelement einen Koppelabschnitt aufweist, und durch Ein- oder Ausschrauben in das Wellrohr einfach eine Anpassung der Länge der Gewindespindel erfolgen kann, beispielsweise für unterschiedliche Bauformen von Verstellantrieben.

Ein Vorteil der Erfindung ist, dass die Energieabsorptionsvorrichtung durch die Integration in die Gewindespindel keinen zusätzlichen äußeren Bauraum beansprucht. Dadurch kann eine kompaktere Bauweise als im Stand der Technik realisiert werden.

Weiterhin ist es möglich, durch Integration mindestens eines Energieabsorptionselements in die Gewindespindel die Anzahl der im Stand der Technik erforderlichen externen Elemente der Energieabsorptionsvorrichtung zu reduzieren. Dadurch kann in vorteilhafter Weise der Fertigungs- und Montageaufwand verringert werden.

Ein weiterer Vorteil ist, dass eine bestehende Konstruktion eines Verstellantriebs durch Einsatz einer erfindungsgemäßen Gewindespindel mit geringem Aufwand mit einer Energieabsorptionsfunktion ausgestattet werden kann. Hierzu ist es lediglich erforderlich, anstelle einer herkömmlichen Gewindespindel eine erfindungsgemäße Gewindespindel einzusetzen.

Bevorzugt ist, dass die Energieabsorptionsvorrichtung ein Deformationselement und/oder eine Friktionsvorrichtung aufweist. Ein Deformationselement kann in an sich bekannter Weise mindestens eine Biegelasche, eine Reißlasche oder eine Biege-Reißlasche umfassen, mit einem Materialabschnitt, der zur Energieabsorption plastisch umgebogen und/oder gestaucht oder gedehnt und/oder aufgetrennt wird. Alternativ oder zusätzlich kann eine Öffnung, beispielsweise ein Schlitz oder ein rohrförmiges Element, durch einen Amboss, Dorn, Verformungsorgan oder dergleichen plastisch aufgebogen oder aufgeweitet werden. Eine Friktionsvorrichtung kann mittels reibschlüssig miteinander verbundener Friktionselemente realisiert sein, die im Crashfall unter Überwindung der Reibungskraft relativ zueinander bewegt werden, wodurch kinetische Energie in Wärme umgewandelt wird. Derartige Deformations- und/oder Friktionsvorrichtungen können einzeln oder in Kombination in oder an der Gewindespindel angebracht oder zusammen mit dieser ausgebildet sein. Bei einer relativen Bewegung der Spindelmutter zur Gewindespindel in Richtung der Spindelachse wird eine Deformation und/oder Reibung erzeugt, so dass eine kontrolliert abgebremste Bewegung der Halterung der Spindelmutter relativ zum Koppelabschnitt der Gewindespindel erfolgt, und entsprechend die über den Verstellantrieb miteinander verbundenen Funktionselemente abgebremst. Dabei wird erfindungsgemäß der Bewegungsweg der Abbremsung im Crashfall, der sogenannte Crashweg, in der Längserstreckung der Gewindespindel zur Verfügung gestellt.

Für die Realisierung der Erfindung ist es vorteilhaft, dass die Gewindespindel Elemente oder durch Abschnitte oder Teilbereiche definierte Elemente aufweist, die über eine Energieabsorptionsvorrichtung miteinander verbunden sind, im Crashfall um einen Crashweg in axialer Richtung unter Energieabsorption in der Energieabsorptionsvorrichtung relativ zueiander bewegbar sind.

Es kann vorgesehen sein, dass die Gewindespindel zumindest einen Rohrabschnitt aufweist. Die Gewindespindel kann durchgehend oder abschnittweise als rohrförmiger Hohlkörper koaxial zur Spindelachse ausgebildet sein, oder einen oder mehrere rohrförmige Abschnitte umfassen, beispielsweise im Bereich des Außengewindes, und/oder in Achsrichtung, d.h. in Richtung der Spindelachse davor oder dahinter. Ein Rohrabschnitt bietet die vorteilhafte Möglichkeit, mit geringem Aufwand eine Energieabsorption zu realisieren, beispielsweise durch zumindest teilweises plastisches Aufweiten, Quetschen, Stauchen, Dehnen, Umbiegen, Auftrennen der Rohrwandung oder dergleichen. Es ist ebenfalls möglich, mindestens ein zusätzliches Energieabsorptionselement mit einem Rohrabschnitt zu verbinden. Dabei kann ein Rohrabschnitt das Außengewinde und/oder den Koppelabschnitt aufweisen oder damit verbunden sein. Es ist auch denkbar und möglich, zwei oder mehrere Rohrabschnitte vorzusehen, die im Crashfall unter Energieabsorption relativ zueinander bewegt werden können.

Durch einen Rohrabschnitt kann außerdem in vorteilhafter Weise das Gewicht der Gewindespindel reduziert werden.

Mit der Rohrwandung eines Rohrabschnitts kann mindestens ein Energieabsorptionselement verbunden sein, bevorzugt kann ein Energieabsorptionselement zumindest teilweise einstückig mit dem Rohrabschnitt ausgebildet sein. Dies kann beispielsweise dadurch realisiert sein, dass ein streifenförmiger Bereich der Rohrwandung, der sich bevorzugt axial in Richtung der Spindelachse erstreckt, als Biegestreifen oder -lasche, Reißlasche oder kombinierte Biege-Reißlasche ausgebildet ist, die im Crashfall unter Energieabsorption aus der Rohrwandung herausgebogen oder -gerissen wird. Alternativ oder zusätzlich kann die Rohrwandung eine bevorzugt in Richtung der Spindelachse erstreckte schlitzförmige Öffnung aufweisen, die durch einen Dorn oder dergleichen im Crashfall pflugartig aufgeweitet wird. Eine weitere Möglichkeit ist, an der Rohrwandung radial vorstehende Vorsprünge wie Stege oder Sicken vorzusehen, die im Crashfall zur Energieabsorption gequetscht, zerspant oder anderweitig plastisch deformiert werden. Vorteilhaft ist dabei, dass derartige Energieabsorptionselemente durch Formgebung bzw. Umformung des Rohrabschnitts mit geringem Aufwand herstellbar sind.

Ein Rohrabschnitt kann aus metallischem Material ausgebildet sein, beispielsweise aus Stahl oder Aluminium, wodurch in die Rohrwandung einfach einstückig Biegestreifen, Reißlaschen, Biege-Reißlaschen, Schlitze, Sicken oder dergleichen zur Energieabsorption geeignete Deformationselemente integriert gefertigt werden können. Alternativ kann auch ein Kunststoffmaterial eingesetzt werden, bevorzugt ein thermoplastischer Kunststoff, wodurch Energieabsorptionselemente einstückig im Spritzgussverfahren herstellt werden können.

Eine vorteilhafte Ausführung kann dadurch realisiert sein, dass die Gewindespindel ein Kernelement und ein das Außengewinde aufweisendes Gewindeelement aufweist, wobei das Außengewinde über die Energieabsorptionseinrichtung mit dem Kernelement gekoppelt ist. Über das Außengewinde wird im Crashfall die Crashenergie in das Gewindeelement eingeleitet, und das Kernelement weist bevorzugt den Koppelabschnitt auf, wodurch es gegen das Gewindeelement in Richtung der Spindelachse an der Lenksäule abgestützt ist. Folglich werden im Crashfall das Gewindeelement und das Kernelement axial, in Richtung der Spindelachse gegeneinander belastet. Die Crashenergie wird durch die dazwischen angeordnete Energieabsorptionsvorrichtung aufgenommen, welche dadurch in Richtung der Spindelachse über einen Crashweg gestaucht oder gedehnt wird, wobei das Kernelement und das Gewindeelement unter Energieabsorption axial relativ zueinander verlagert werden.

Die Energieabsorptionsvorrichtung kann mindestens ein Deformationselement und/oder mindestens eine Friktionsvorrichtung umfassen, wobei das Kernelement und/oder das Gewindeelement ein Energieabsorptionselement aufweisen können. Beispielsweise kann eine Friktionsvorrichtung dadurch realisiert sein, dass das Gewindeelement mit dem Kernelement reibschlüssig verbunden ist und unter Überwindung einer Reibungskraft relativ zu diesem über einen Crashweg bewegbar ist. Zusätzlich oder alternativ kann mindestens ein Deformationselement vorgesehen sein, welches Energie durch plastische Deformation des Kern- und/oder Gewindeelements absorbieren kann, beispielsweise durch Biegung, Trennung, Stauchung, Dehnung, Aufweitung oder andere Verformung, oder Kombinationen davon.

Es kann vorgesehen sein, dass das Gewindeelement als Gewindehülse ausgestaltet und auf dem Kernelement in Richtung der Spindelachse axial verschiebbar angeordnet ist, wobei eine Energieabsorptionsvorrichtung zwischen dem Gewindeelement und dem Kernelement angeordnet ist. Das Gewindeelement umfasst bevorzugt einen Gewindeabschnitt außen auf einem Rohrabschnitt, der koaxial auf dem Kernelement angeordnet ist, welches ebenfalls einen Rohrabschnitt aufweisen kann, oder alternativ auch massiv ausgebildet sein kann. Die Gewindehülse kann zur Bildung einer Friktionsvorrichtung reibschlüssig auf dem Außenumfang des Kernelements sitzen, wobei die Reibungskraft hoch genug ist, um die beim Verstellen der Lenksäule auftretenden axialen Verstellkräfte übertragen zu können. Beim Überschreiten einer Grenzkraft, die nur im Crashfall auftritt, wird der Reibschluss überwunden, und die Gewindehülse wird unter Energieabsorption axial auf dem Kernelement verschoben. Die Kontaktflächen zwischen Gewinde- und Kernelement können bezüglich einer vorgegebenen Reibung ausgestaltet sein, beispielsweise durch eine vorgegebene Oberflächenbeschaffenheit, Materialpaarung oder dergleichen.

Zusätzlich oder alternativ kann zwischen der Gewindehülse und dem Kernelement eine Deformationsvorrichtung angeordnet sein. Diese kann ein oder mehrere Deformationselemente umfassen, die bei einer relativen axialen Bewegung im Crashfall über einen vorgegebenen Crash- oder Deformationsweg plastisch deformiert werden. Beispielsweise kann das Kernelement ein nach außen vorstehendes Trenn- oder Verformungsmittel aufweisen, wie etwa eine Aufweitung oder einen Dorn, wodurch die Gewindehülse bei einer relativen axialen Bewegung im Crashfall plastisch deformiert, aufgeweitet und/oder aufgetrennt wird. Alternativ oder zusätzlich ist es ebenfalls denkbar und möglich, dass die Gewindehülse Deformationsmittel aufweist, um das Kernelement plastisch zu deformieren.

Ein oder mehrere Deformationselemente können nach innen vorstehend in dem rohrförmigen Kernelement ausgebildet sein, beispielsweise als Biege- oder Reißlaschen, die aus nach innen umgebogenen Streifen der Rohrwandung gebildet sind, bevorzugt einstückig mit dem Kernelement. An dem oder den Deformationselementen kann ein Betätigungselement angreifen, beispielsweise parallel oder koaxial zur Spindelachse angeordnetes Betätigungselement, beispielsweise einen Betätigungsstift, welcher axial in das rohrförmige Kernelement eintaucht. Im Crashfall wird es weiter in die Öffnung des Kernelements hineinbewegt, wobei die Biegelasche in Richtung der Spindelachse fortlaufend unter Energieabsorption umgebogen wird, oder eine Reißlasche fortlaufend herausgetrennt wird. Alternativ oder zusätzlich kann durch das Betätigungselement ein Schlitz in dem Kernelement fortlaufend plastisch aufgeweitet werden und/oder die Ränder mittels eines Hobels durch Abheben eines Spans deformiert werden.

Das Kernelement und/oder das Gewindeelement können Energieabsorptionselemente aufweisen, die oben bereits erwähnt sind, wie beispielsweise Biegestreifen, Reißlaschen, Biege-Reißlaschen, Sicken, Stege, Schlitze oder dergleichen, und damit korrespondierende Verformungsmittel, welche bei einer relativen Bewegung zur Erzeugung einer plastischen Verformung zusammenwirken. Prinzipiell sind auch andere Energieabsorptionsmechanismen einsetzbar, bei denen entlang einer Relativbewegung über einen Crashweg fortlaufend kinetische Energie in Verformungsarbeit und/oder Reibung umgewandelt wird.

Das Gewindeelement und/oder das Kernelement können zumindest teilweise aus einem Metall und/oder einem Kunststoff ausgebildet sein. Wie oben bereits beschrieben ist, ermöglicht ein metallischer Werkstoff wie Stahl oder dergleichen in vorteilhafter Weise eine einstückige Ausbildung von Energieabsorptionselementen wie Biegestreifen, Reißlaschen und dergleichen, und zwar am Gewinde- und/oder am Kernelement. Es kann vorteilhaft sein, dass das Gewindeelement ganz oder teilweise aus einem Kunststoff ausgebildet ist, wodurch eine vorteilhaft niedrige Reibung des Außengewindes erzeugt werden kann. Außerdem kann aus dem Kunststoff ein Energieabsorptionselement gebildet werden, beispielsweise ein Steg oder Wandungsabschnitt einer rohrförmigen Gewindehülse, der bei einer relativen axialen Bewegung durch ein am Kernelement ausgebildetes Verformungsmittel deformiert, abgetrennt oder anders plastisch verformt wird. Dabei hat Kunststoff den Vorteil, dass nahezu beliebige Formgebungen einfach im Kunststoff-Spritzguss erzeugt werden können, und Kunststoffmaterialien mit unterschiedlichen Eigenschaften wie Härte, Zähigkeit, Gleitfähigkeit, Elastizität und dergleichen zur Verfügung stehen. Es ist gleichfalls möglich, das Kernelement - rohrförmig oder massiv - zumindest teilweise aus einem Kunststoff herzustellen. Das Gewindeelement kann dann aus einem relativ dazu härteren oder festeren Material bestehen, beispielsweise einem metallischen Werkstoff, so dass im Crashfall das Kernelement von dem Gewindeelement unter Energieabsorption deformiert wird. Ebenso ist es denkbar, das Gewindeelement und das Kernelement beide zumindest teilweise aus Kunstoffen zu fertigen, gegebenenfalls aus Kunststoffen mit unterschiedlichen Materialeigenschaften.

Es ist vorteilhaft, dass die Gewindespindel ein Sollbruchelement aufweist. Das Sollbruchelement sorgt dafür, dass die Energieabsorptionsvorrichtung erst bei Überschreiten einer Grenzkraft anspricht, die nur durch die hohe eingeleitete Crashenergie im Crashfall überschritten wird. Das Sollbruchelement kann beispielsweise einen Scherniet oder Scherstift aufweisen, welcher die im Crashfall unter Energieabsorption relativ zueinander bewegbaren Elemente im Normalbetrieb relativ zueinander fixiert, und nur im Crashfall bricht bzw. reißt und die Relativbewegung zur Energieabsorption freigibt. Beispielsweise kann das oben genannte Gewindeelement mittels eines Scherniets oder dergleichen Sollbruchelement mit dem Kernelement verbunden sein. Die Relativbewegung eines Deformationselements wie einer Biege- und/oder Reißlasche oder dergleichen kann ebenfalls durch ein Sollbruchelement abgesichert sein.

Bevorzugt kann die Gewindespindel einen Koppelabschnitt aufweisen, zur Ankopplung an eine Lenksäule. Der Koppelabschnitt kann beispielsweise an einem Kernelement ausgebildet sein, und eine Lasche mit Querbohrung zur axial abgestützten, gelenkigen Anbindung an die Lenksäule aufweisen. Wenn ein Energieabsorptionselement zwischen einem Betätigungselement und dem Kernelement oder dem Gewindeelement angeordnet ist, kann dieses Betätigungselement den Koppelabschnitt aufweisen.

Die Spindelmutter kann bevorzugt an einer Halterung in Richtung der Spindelachse abgestützt sein. Die Halterung ist ausgebildet zur Ankopplung des Verstellantriebs an eine Lenksäule, und überträgt die auf den Spindeltrieb wirkenden axialen Kräfte, also im Normalbetrieb die Verstellkraft, und im Crashfall die hohe Crashkraft. In der Halterung kann die Spindelmutter bei einem Tauchspindelantrieb drehend antreibbar gelagert sein, und bei einem Rotationspindeltrieb drehfest in Richtung der Spindelachse abgestützt sein. Über die Halterung kann die Spindelmutter an die Lenksäule angekoppelt und axial abgestützt werden.

Das Kernelement kann seinerseits eine Gewindespindel eines Spindeltriebs bilden oder aufweisen, die in das Innengewinde des Wellrohrs eingeschraubt sein kann.

In den Innengewindeabschnitt kann eine Gewindebuchse eingeschraubt sein, welche als Spindelmutter für eine weitere Stufe eines Spindeltriebs ausgebildet sein kann. Die Gewindebuchse hat ein Außengewinde, welches mit dem Innengewindeabschnitt des Wellrohrs korrespondiert und durch Einschrauben darin befestigt werden kann. Außerdem weist die hohle Gewindebuchse ein Innengewinde auf, in welches eine weitere Gewindespindel eingeschraubt werden kann, die ein zu dem Innengewinde passendes Außengewinde aufweist. Zusammen mit der durch das Wellrohr gebildeten ersten Gewindespindel kann auf diese Weise ein zweistufiger Spindeltrieb gebildet werden. Vorteilhaft ist dabei unter anderem, dass die zweite Gewindespindel beim Einschrauben durch die Gewindebuchse hindurch in Richtung der Spindelachse in das Innere des Wellrohrs eintauchen kann. Durch diese koaxiale Anordnung der zweiten Gewindespindel in dem als erste Gewindespindel ausgebildeten Wellrohr kann ein besonders kompakter mehrstufiger Spindeltrieb realisiert werden. Das Wellrohr kann dabei das Energieabsorptionselement wie in der einstufigen Ausführung in die mehrstufige Gewindespindel integriert sein.

Eine vorteilhafte Weiterbildung kann vorsehen, dass das Wellrohr einen Stützmantel aus plastisch verformbarem Weichmaterial aufweist. Das plastisch verformbare Weichmaterial kann beispielsweise ein Kunststoff sein und außen und/oder innen angebracht sein. Unter einem Weichmaterial wird ein Material verstanden, welches eine geringere Härte aufweist als das Wellrohr oder ein ungehärteter Stahl. Bevorzugt kann der Stützmantel außen, als äußere Umhüllung ausgebildet sein. Das Weichmaterial ist dabei zur Bildung des Stützmantels derart bemessen, dass der daraus geformte Stützmantel in axialer Richtung leichter plastisch verformbar ist als das Wellrohr. Der Stützmantel kann rohrförmig ausgebildet sein, und bevorzugt das Wellrohr über den gesamten Umfang umschließen, wobei es vorzugsweise au-ßen an den Wellen anliegt. Mit anderen Worten kontaktiert der Stützmantel die Wellen im Bereich der radial vorstehenden Wellenberge, und taucht bevorzugt nicht vollständig in die Wellentäller ein, also reicht nicht bis zum Grund der umlaufenden Vertiefungen. Bei Zusammenstauchen des Wellrohrs wird das Weichmaterial in axialer Richtung in sich plastisch gestaucht, wobei es das Wellrohr radial umgreift. Dadurch, dass die Wellenberge zumindest abschnittweise an dem sich verformenden Stützmantel in axialer Richtung entlanggleiten, wird das Wellrohr geführt und abgestützt, dass ein seitliches Ausbrechen oder Ausknicken quer zur Spindelachse unterdrückt oder zumindest reduziert wird, da der sich verformende Stützmantel sich wie ein zusätzlicher Überzug über das Wellrohr im Crashfall geschoben wird.

Die Erfindung umfasst weiterhin eine verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und die einen Verstellantrieb aufweist, der eine mit einem Außengewinde in eine Spindelmutter eingreifende Gewindespindel und einen Antriebsmotor umfasst, der mit der Gewindespindel oder der Spindelmutter derart gekoppelt ist, dass die Gewindespindel und die Spindelmutter relativ drehend zueinander antreibbar sind, wobei der Verstellantrieb zumindest einen Koppelabschnitt aufweist, und mit der Trageinheit und/oder der Stelleinheit verbunden ist, wobei erfindungsgemäß dass die Gewindespindel ausgebildet ist gemäß einer oder mehrerer der vorangehend beschriebenen Ausführungen.

Der Verstellantrieb kann jeweils zur Längs- oder Höhenverstellung an der Lenksäule angebracht sein, wobei sich die Spindelmutter und die Gewindespindel jeweils axial, in Richtung der Spindelachse zwischen den relativ zueinander verstellbaren Bauelementen der Lenksäule abstützen, beispielsweise zwischen der Trageinheit und der Manteleinheit in Höhenrichtung, und zwischen der Manteleinheit und der Stelleinheit in Längsrichtung der Lenkspindelachse. Es ist ebenfalls denkbar und möglich, dass mehrere Verstellantriebe je Verstellrichtung zum Einsatz kommen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: ein Verstellantrieb in einer schematischen perspektivischen Darstellung,
- Figur 4: eine Gewindespindel des Verstellantriebs gemäß Figur 3 in einer schematisch auseinander gezogenen Darstellung,
- Figur 5: einen Längssschnitt durch den Verstellantrieb gemäß Figur 3 entlang der Spindelachse (Gewindespindelachse) in normalem Betriebszustand vor einem Crash,
- Figur 6: den Verstellantrieb gemäß Figur 5 nach einem Crash,
- Figur 7: den Verstellantrieb gemäß Figur 5 mit einer Gewindespindel in einer zweiten Ausführungsform,
- Figur 8: den Verstellantrieb gemäß Figur 5 in einer Teilansicht mit einer Gewindespindel in einer dritten Ausführung,
- Figur 9: eine Detailansicht der Gewindespindel eines Verstellantriebs wie in Figur 8 in einer vierten Ausführung,
- Figur 10: eine Ausführung eines Verstellantriebs in einer erfindungsgemäßen Ausführung in einer schematischen Ansicht ähnlich Figur 3,
- Figur 11: einen Längsschnitt durch den Verstellantrieb gemäß Figur 10 entlang der Spindelachse (Gewindespindelachse) in normalem Betriebszustand vor einem Crash, in einer Ansicht wie in Figur 4,
- Figur 12: eine vergrößerte Detailansicht von Figur 11,
- Figur 13: den Verstellantrieb gemäß Figur 11 nach einem Crash,
- Figur 14: die Gewindespindel eines Verstellantriebs gemäß Figur 10 in schematisch auseinander gezogenen Darstellung,
- Figur 15: eine schematische perspektivische Ansicht eines Verstellantriebs in einer sechsten Ausführung (Rotationsspindelantrieb).

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

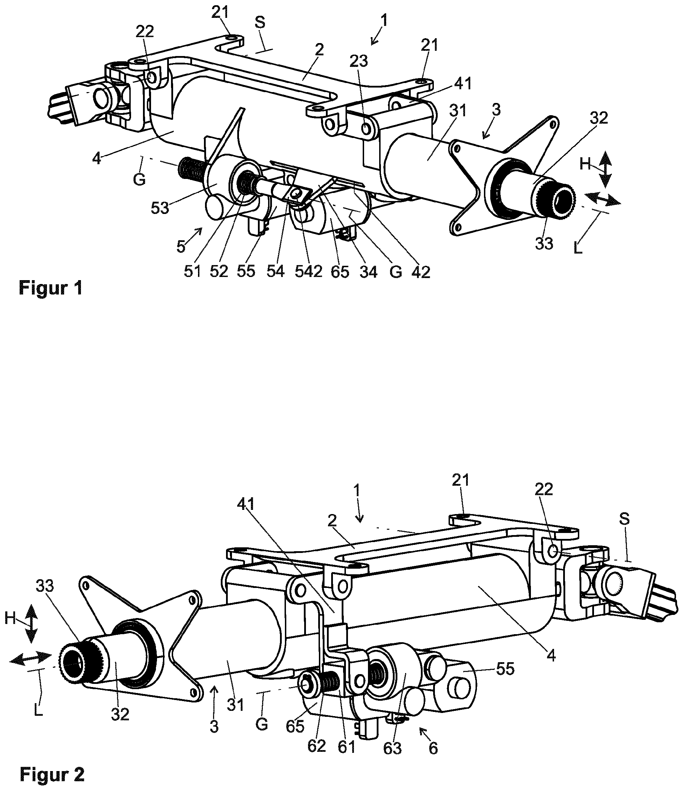

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines (Höhen-)Verstellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

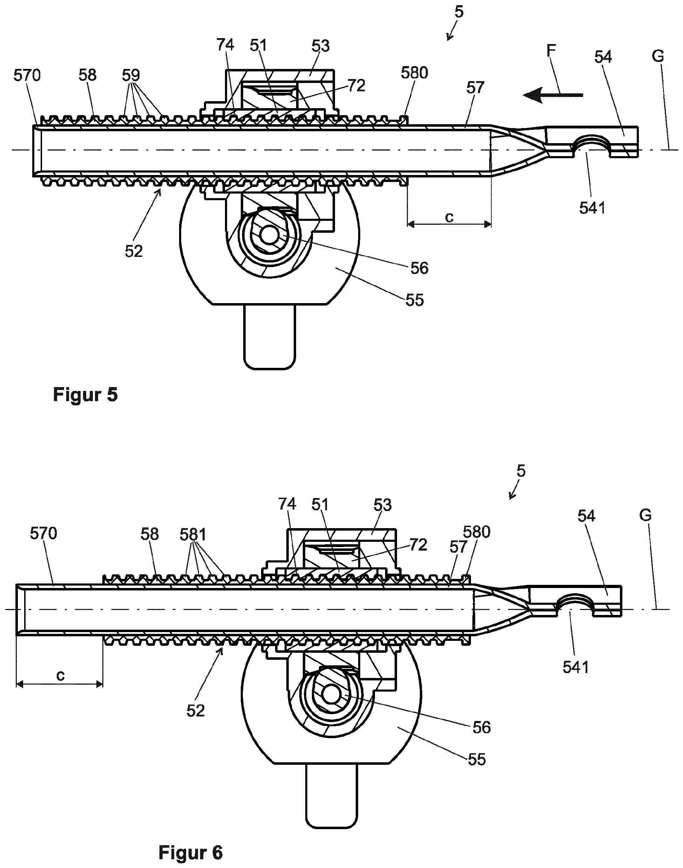

Ein Verstellantrieb 5 bildet einen Längs-Verstellantrieb zur Längsverstellung der Stelleinheit 3 relativ zur Manteleinheit 4 in Richtung der Längsachse L, wobei die Längsachse L der Drehachse der Lenkspindel 32 entspricht. Dieser weist einen Spindeltrieb mit einer Spindelmutter 51 mit einem sich längs einer Spindelachse G erstreckenden Innengewinde 74 auf (siehe Figur 5), in die eine Gewindespindel 52 eingreift, also mit ihrem Außengewinde in das korrespondierende Innengewinde 74 der Spindelmutter 51 eingeschraubt ist. Die Gewindespindelachse der Gewindespindel 52 ist identisch mit der Spindelachse G und verläuft im Wesentlichen parallel zur Längsachse L.

Die Spindelmutter 51 ist um die Spindelachse G drehbar in einem Lagergehäuse 53 gelagert, welches mit der Manteleinheit 4 verbunden ist. Axial, d.h. in Richtung der Spindelachse G ist die Spindelmutter 51 axial über das Lagergehäuse 53 an der Manteleinheit 4 abgestützt. Die Gewindespindel 52 ist mit einem an ihrem hinteren Ende ausgebildeten Koppelabschnitt 54 über ein Übertragungselement 34 mit der Stelleinheit 3 verbunden, und zwar fest in Richtung der Spindelachse G bzw. der Längsachse L und feststehend bezüglich Drehung um die Spindelachse G. Durch die drehend antreibbare Spindelmutter 51 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Antriebsmotor 55 auf, von dem die Spindelmutter 51 bezüglich der Spindelachse G relativ zur feststehenden Gewindespindel 52 drehend antreibbar ist. Dadurch kann - je nach Drehrichtung des Antriebsmotors 55 - die Gewindespindel 52 in Richtung der Spindelachse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird.

In Figur 2, welche eine perspektivische Ansicht der Lenksäule 1 von der in Figur 1 hinten liegenden Seite zeigt, ist erkennbar, wie der zweite Verstellantrieb 6 zur Verstellung in Höhenrichtung H an der Lenksäule 1 angebracht ist. Dieser Verstellantrieb 6 umfasst eine Spindelmutter 61, in deren Innengewinde längs einer Achse G eine Gewindespindel 62 eingreift. Die Gewindespindel 62 ist in einem Lagergehäuse 63, welches an der Manteleinheit 4 schwenkbar befestigt ist, drehbar um die Spindelachse G gelagert und axial, in Richtung der Spindelachse G, an der Manteleinheit 4 abgestützt, und von einem elektrischen Antriebsmotor 65 wahlweise in beide Rotationsrichtungen um die Spindelachse G drehend antreibbar. Entsprechend handelt es sich bei dem Verstellantrieb 6 um einen sogenannten Rotationsspindelantrieb.

Die Spindelmutter 61, die aus Kunststoff oder aus einem Buntmetall wie Messing oder dergleichen gebildet sein kann, ist bezüglich einer Drehung um die Spindelachse G feststehend in einer Halterung an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Antriebsmotors 65 - die Spindelmutter 61 in Richtung der Achse G translatorisch relativ zur Gewindespindel 52 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

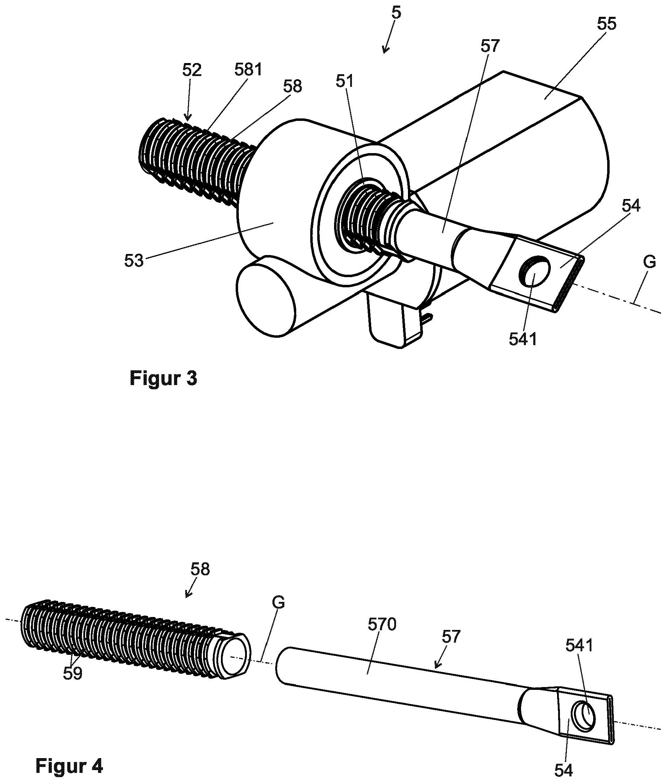

Die Figur 3 zeigt den als Tauchspindelantrieb ausgebildeten Verstellantrieb 5 in einzelner Darstellung.

Die erfindungsgemäße Gewindespindel 52 weist in einer ersten Ausführung ein rohrförmiges, hohlzylindrisches Kernelement 57 auf, bevorzugt aus Stahlrohr oder Aluminiumrohr, auf dem koaxial ein Gewindeelement 58 unlösbar angebracht ist, welches das Außengewinde 59 mit einem schraubenförmig umlaufenden Gewindezahn aufweist. Es sind auch mehrgängige Gewinde denkbar und möglich. Das Gewindeelement 58 bildet eine rohrförmige Gewindehülse, die einzeln als Kunststoff-Spritzgussteil gefertigt sein kann, wie dies in der auseinander gezogenen Darstellung von Figur 4 erkennbar ist. Im montierten Zustand, der perspektivisch in Figur 3 und als Längsschnitt in Figur 5 gezeigt ist, ist das Gewindeelement 58 koaxial auf dem rohrförmigen Abschnitt 570 des Kernelements 57 angebracht, bevorzugt mittels axial reibschlüssigen Aufpressens in Richtung der Spindelachse G oder mittels Umspritzen.

Zur Bildung des Koppelabschnitts 54, welches zur Kopplung des Verstellantriebs 5 mit der Lenksäule 1 dient, ist der Rohrabschnitt 570 des Kernelements 57 quer zur Gewindespindelachse bevorzugt durch Kaltumformung flach verquetscht, und weist eine senkrecht zur Verquetschung durchgehende Befestigungsbohrung 541 auf. Durch diese Befestigungsbohrung 541 ist ein Befestigungsbolzen 542 zur drehfesten Verbindung mit dem Übertragungselement 34 hindurchgeführt, wie in Figur 1 erkennbar ist. Es sind auch mehrere Befestigungsbolzen denkbar und möglich.

Die Gewindespindel 52 ist in eine Spindelmutter 51 eingeschraubt, die in dem Lagergehäuse 53 drehbar, aber in Richtung der Spindelachse G fest abgestützt ist. Die Spindelmutter 51 ist als Getrieberad ausgebildet bzw. mit einem Getrieberad verbunden und weist auf ihren Außenumfang eine Verzahnung 72 auf, nämlich eine Schneckenverzahnung. Mit der Motorwelle des Antriebsmotors 55 ist eine Schnecke 56 verbunden, die mit der Verzahnung 72 kämmt, so dass die Spindelmutter 51 relativ zur Gewindespindel 52 drehend antreibbar ist.

An seinem dem Koppelabschnitt 54 zugewandten Ende weist das Gewindeelement 58 ein Anschlagelement 580, welches als umlaufender Vorsprung oder Kragen ausgebildet ist, der mit dem Gewindeelement 58 bevorzugt einstückig im Kunststoff-Spritzguss ausgebildet sein kann.

Die Anschlagelemente 580 bildet einen axialen Anschlag, der nicht durch die Spindelmutter 51 hindurch geschraubt werden können und somit den Verstellweg begrenzt.

Im normalen Betriebszustand, der in Figur 5 gezeigt ist, sitzt das Gewindeelement 58 reibschlüssig und/oder formschlüssig auf dem Rohrabschnitt 570 des Kernelements 57. Durch drehenden Antrieb der Spindelmutter 51 kann die Gewindespindel 5 als Ganzes relativ zur Spindelmutter 51 axial verlagert werden. Dadurch, dass die Spindelmutter 51 über das Lagergehäuse 53 axial an der Manteleinheit 4 abgestützt ist, und die Gewindespindel 5 über den Koppelabschnitt an der Stelleinheit 3, können die Manteleinheit 4 und die Stelleinheit 3 in Längsrichtung, also in Richtung der Längsachse L, relativ zueinander verstellt werden. Im Crashfall wirkt die kinetische Crashenergie in Richtung der Längsachse L auf die Lenkspindel 32 ein, und wird als Crashkraft F über die Stelleinheit 3 und das Übertragungselement 34 in den Koppelabschnitt 54 der Gewindespindel 5 eingeleitet.

Die in axialer Richtung wirkende Crashkraft F wird von dem Kernelement 57 wirkt über den Reibschluss auf das Gewindeelement 58, welches seinerseits axial über die Spindelmutter 51 und das Lagergehäuse 53 an der Manteleinheit 4 abgestützt ist.

Wenn die Crashkraft F die Haltekraft des Reibschlusses zwischen Kernelement 57 und Gewindeelement 58 überschreitet, wird das Kernelement 57 in Richtung der Crashkraft F relativ zum Gewindeelement 58 um einen Crashweg c axial verschoben. Aus der in Figur 5 dargestellten Situation vor den Crash wird das Kernelement 57 relativ zum Gewindeelement 58 in Pfeilrichtung nach links verschoben, bis die in Figur 6 dargestellte Situation erreicht ist. Das Kernelement 57 und das Gewindeelement 58 bilden eine Friktionsvorrichtung, in dem die eingeleitete kinetische Crashenergie durch die entlang des Crashwegs c auftretende Reibung absorbiert wird.

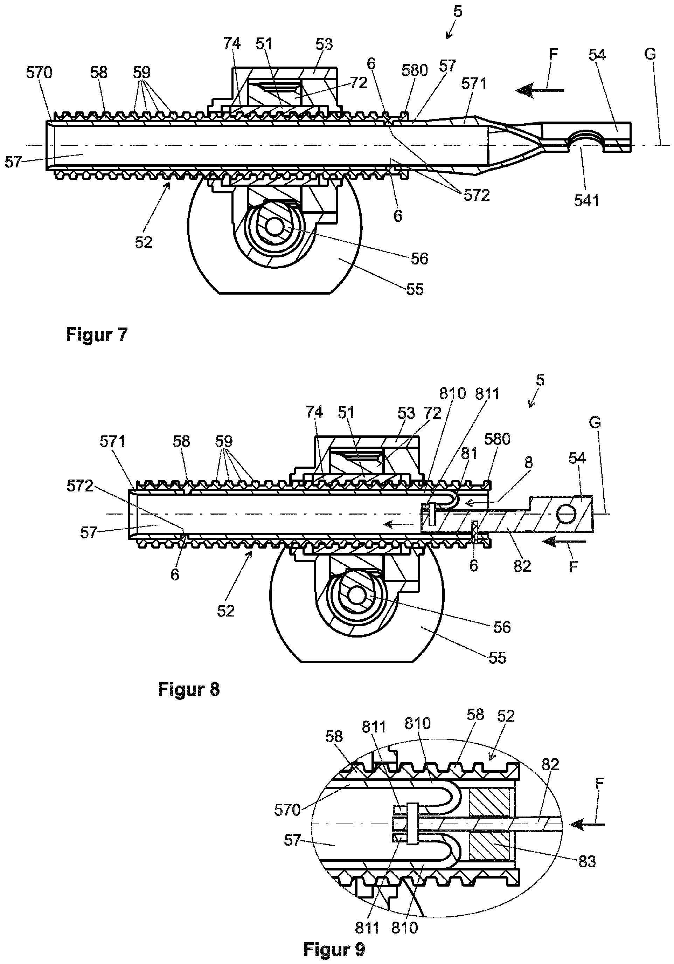

Figur 7 zeigt eine zweite Ausführungsform in derselben Schnittansicht wie in Figur 5. Dabei weist das Kernelement 57 eine Aufweitung 571 auf, die vom Koppelabschnitt 54 aus in Richtung zum Gewindeelement 58 hin konisch zusammenläuft. Diese Aufweitung 571 wird im Crashfall durch die Crashkraft F - in der Zeichnung von rechts nach links - in das Gewindeelement 58 hineingepresst, wodurch dieses plastisch aufgeweitet wird. Dadurch wird kinetische Energie absorbiert und in Verformungsarbeit umgesetzt. Die Aufweitung 571 bildet ein Deformationsmittel, welches auch anders geformt sein kann, beispielsweise um das Gewindeelement 58 auf andere Art zu deformieren, beispielsweise zu stauchen oder aufzutrennen.

Weiterhin weist die Ausführung gemäß Figur 7 Sollbruchelemente 6 auf, welches von dem Gewindeelement 58 radial nach innen vorstehende Scherstifte umfasst, die in Öffnungen 572 des Kernelements 57 eintauchen. Im Normalbetrieb halten die Sollbruchelemente 6 das Gewindeelement 58 in axialer Position auf dem Kernelement 57 und verhindern somit im Normalbetrieb eine ungewollte Verlagerung des Kernelements 57 gegenüber dem Gewindeelement 58. Im Crashfall werden das oder die Sollbruchelemente 6 durch die Crashkraft durchbrochen oder abgeschert, und geben die relative axiale Bewegung von Gewindeelement 58 und Kernelement 57 zur Energieabsorption frei.

In den Ausführungen der Figuren 3 bis 7 weist die Gewindespindel 52 mindestens zwei Elemente auf - nämlich das Kernelement 57 und das Gewindeelement 58 und/oder ein Betätigungselement 82 - die über eine Energieabsorptionsvorrichtung miteinander verbunden sind, die eine Friktionsvorrichtung umfasst, und in Figur 7 zusätzlich eine Deformationseinrichtung. Die besagten Elemente 57, 58, 82 sind im Crashfall um einen Crashweg in axialer Richtung unter Energieabsorption relativ zueinander bewegbar.

In der in Figur 8 gezeigten dritten Ausführung weist die Gewindespindel 52 eine Energieabsorptionseinrichtung 8 auf, die als ein Deformationselement eine Biegelasche 81 umfasst, die auch in an sich bekannter Weise als Biege-Reiß-Lasche ausgebildet sein kann, die durchtrennbare Reißlinien aufweist. Die Biegelasche 81 wird gebildet durch einen axialen Streifen der Rohrwandung des Rohrabschnitts 570, der einseitig axial an einem festen Ende 810 bevorzugt einstückig mit dem Kernelement 57 verbunden ist, und der ein freies Ende 811 aufweist. Das freie Ende ist um etwa 180° nach innen ins Innere des rohrförmigen Kernelements 57 umgebogen, so dass es in axialer Richtung, zurück in Richtung des fest mit dem Rohrabschnitt 570 verbundenen Endes 810 weist. Das freie Ende 811 der Biegelasche 81 ist mit einem stab- oder stiftförmigen Betätigungselement 82 in einem Endbereich verbunden, mit dem es in das rohrförmige Kernelement 57 axial eintaucht. An seinem freien, in der Zeichnung rechts liegenden Endbereich weist das Betätigungselement 82 einen Koppelabschnitt 54 auf, der ausgebildet sein kann wie in den vorangehenden Figuren gezeigt.

Über ein Sollbruchelement 6, beispielsweise einen Scherstift, ist das Betätigungselement 82 - wie oben für das Gewindeelement 58 beschrieben - an dem Kernelement 57 losbrechbar gesichert.

Wirkt eine Crashkraft F axial in Richtung der Spindelachse G auf das Betätigungselement 82, wird beim Überschreiten einer Grenzkraft das Sollbruchelement 6 gebrochen oder abgeschert. Dann bewegt sich das Betätigungselement 82 relativ zu dem Kernelement 57 in axialer Richtung. Dabei nimmt es das Ende 811 der Biegelasche 81 in axialer Richtung mit, wie mit dem Pfeil angedeutet, wobei die Biegelasche 81 fortlaufend in einer Art Walkbewegung umgebogen wird, wobei Verformungsarbeit geleistet und kinetische Energie absorbiert wird.

Anstelle einer einzelnen Biegelasche können auch zwei oder mehr Biegelaschen 81 vorgesehen sein, wie sich aus der ausschnittweise in Figur 9 in derselben Ansicht wie in Figur 8 gezeigten vierten Ausführung ergibt. Diese weist zwei Biegelaschen 81 auf, die auch als Biege-Reiß-laschen ausgebildet sein können. Bevorzugt können diese wie dargestellt symmetrisch bezüglich der Spindelachse G angeordnet sein.

Das Betätigungselement 82 kann in einem Führungselement 83 axial in seiner Bewegung relativ zum Kernelement 57 im Crashfall an der Gewindespindel 52 linear geführt sein.

Die verschiedenen Energieabsorptionsvorrichtungen gemäß der Figuren 4 bis 9 können einzeln oder in Kombinationen in einer erfindungsgemäßen Gewindespindel 52 realisiert werden.

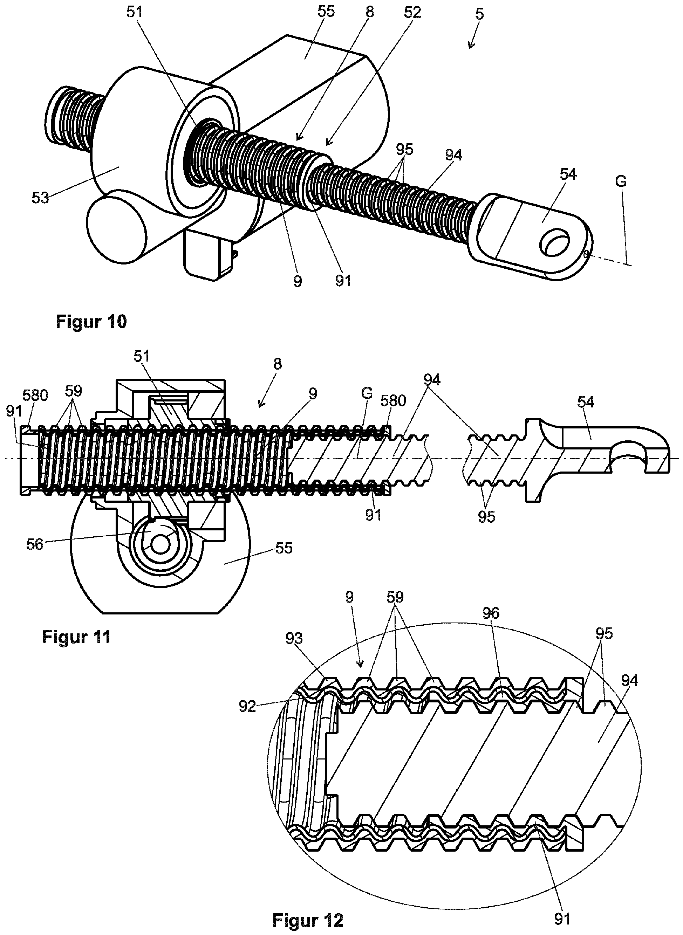

In den Figuren 10 bis 14 ist eine erfindungsgemäßer Verstellantrieb 5 in einer weiteren (fünften) Ausführungsform gezeigt.

Figur 5 zeigt eine schematische perspektivische Ansicht ähnlich Figur 3, und Figur 11 einen Längsschnitt ähnlich Figur 5.

Die Gewindespindel 52 weist ein Wellrohr 9 auf, welches in seiner Rohrwandung eine schraubenförmig um die Spindelachse G umlaufende Einformung aufweist, so dass eine Wellenform gebildet wird, wie in den Längsschnitten, besonders deutlich in der vergrößerten Darstellung von Figur 12, erkennbar ist. Dadurch wird außen auf dem Wellrohr 9 ein Außengewinde 59 gebildet, so dass mit anderen Worten ein Gewindebalg, Gewindebalgrohr, Gewindefaltenbalg, Schraubenbalg oder Schraubenbalgrohr ausgebildet wird. Durch die Einformung wird gleichfalls innen im Wellrohr 9 ein Innengewinde 91 ausgebildet, welches als in das Wellrohr 9 aus Kunststoff eingespritztes Gewindeelement 58 ausgebildet ist.

Mit dem Außengewinde ist das Wellrohr 9 in die Spindelmutter 51 eingeschraubt, wobei die Spindelmutter 51 ein Innengewinde aufweist, welches korrespondierend zu dem Außengewinde des Wellrohrs 9 ist.

Das Wellrohr 9 weist ein metallisches Kernrohr 92 auf, welches eine plastisch geformte wellenförmige Wandung hat und bevorzugt aus einem metallischen Werkstoff wie Stahl, Aluminium oder dergleichen besteht. Das Kernrohr 92 ist auf seinem Außenumfang bevorzugt mit einer Weichbeschichtung aus einem Weichmaterial versehen, welche einem Stützmantel 93 bildet. Dieser ist bevorzugt aus einem gut plastisch verformbaren, bevorzugt unter Druck fließfähigem Kunststoff gebildet, beispielsweise einem thermoplastischen Elastomer, und kann durch Umspritzen auf dem Kernrohr 91 aufgebracht sein. Der Stützmantel 93 ist so ausgestaltet - durch die Materialeigenschaften und die Form und Abmessungen - dass das Material beim axialen Stauchen das Kernrohr 91 umfließt und dynamisch gegen Ausbrechen oder Ausknicken quer zur Spindelachse G abstützt.

Eine Kernspindel 94 ist mit ihren Außengewinde 95 mit axialem Abstand zur Spindelmutter 51 in das Innengewinde 91 des Wellrohrs 9 eingeschraubt, wobei gegebenenfalls eine Gewindebuchse 96 in das Kernrohr 92 eingeschraubt sein kann, in die die Kernspindel 94 eingreift. Die Gewindebuchse 96 kann auch weggelassen werden, oder durch eine auf das Innengewinde 91 aufgebrachte Beschichtung ersetzt sein. Falls eine Gewindebuchse 96 eingesetzt wird, kann sie vorteilhaft als Kunststoff-Spritzgussteil gefertigt sein. Dies eröffnet auch die Möglichkeit, dass die Kernspindel 94 ein vom Innengewinde 91 des Wellrohrs 9 abweichendes Außengewinde 95 hat.

In ihrem dem Wellrohr 9 abgewandten Endbereich weist die Kernspindel 94 einen Koppelabschnitt 54 auf. Die Kernspindel 94 kann aus metallischem Material gefertigt sein, wobei die Wellenform der Wandung durch plastische Umformung erzeugt wird. Die Kernspindel 94 und der Koppelabschnitt 54 sind bevorzugt als ein einstückiges integrales Bauteil ausgebildet.

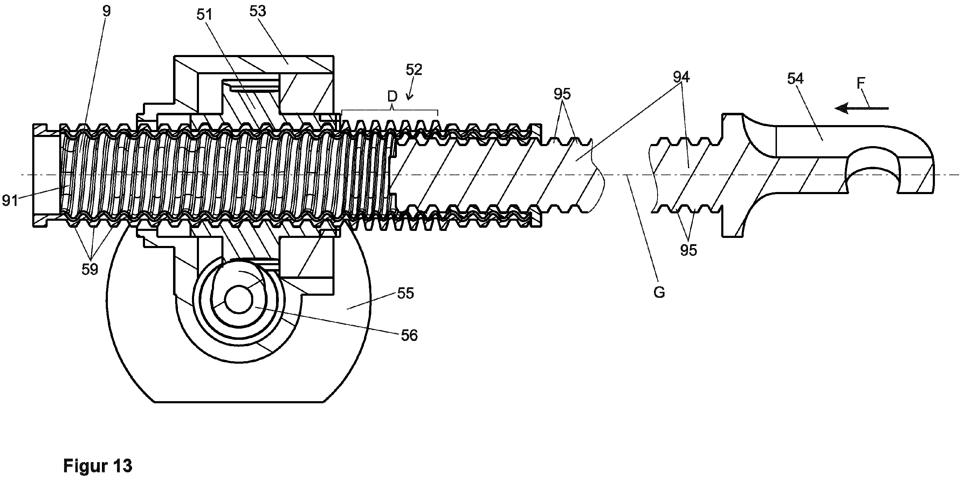

Figur 11 zeigt den normalen Betriebszustand vor einem Crash, Figur 13 zeigt in derselben Ansicht die Situation nach einem Crash, nach der Einwirkung einer hohen Crashkraft F in axialer Richtung der Spindelachse G, wie mit dem Pfeil eingezeichnet.

Die Crashkraft F wird durch die Kernspindel 94 axial in das Wellrohr 9 eingeleitet, welches durch die Spindelmutter 51 axial dagegen abgestützt ist. Dadurch wird das Wellrohr 9 in einem Deformationsabschnitt D zwischen der Kernspindel 94 und der Spindelmutter 51 zusammengestaucht und dabei plastisch unter Energieabsorption deformiert. In der Darstellung von Figur 13 ist dies durch die engeren axialen Abstände zwischen den Gewindegängen des Außengewindes 59 und einem vergrößerten Außendurchmesser in dem Deformationsabschnitt D erkennbar. Dadurch dient das Wellrohr 9 gleichzeitig als Funktionselement des Spindeltriebs und als Energieabsorptionselement.

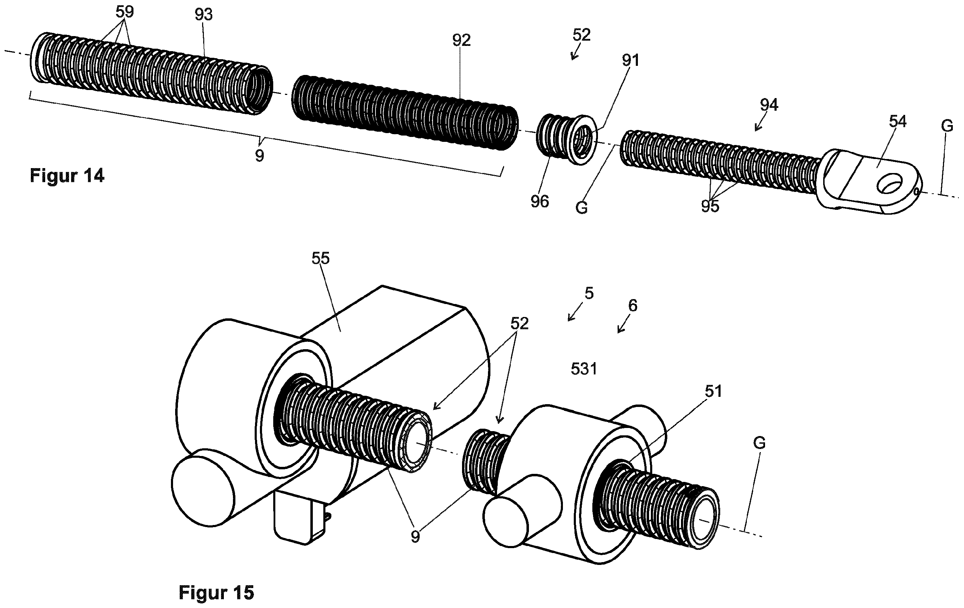

Figur 14 zeigt eine Gewindespindel 52 in einem axial auseinander gezogenen Zustand.

Es ist grundsätzlich auch denkbar und möglich, ein Koppelelement 54 fest mit dem Wellrohr 9 zu verbinden, oder beispielsweise auch die Kernspindel 94 zumindest teilweise als Wellrohr auszugestalten.

Durch die in das Wellrohr 9 eingeschraubte Kernspindel 94 kann ein mehrstufiger Spindeltrieb realisiert sein.

Es ist auch denkbar und möglich, dass ein Gewindeelement 58 und/oder ein Kernelement 57 der in den Figuren 2 bis 9 gezeigten Ausführungen als Energieabsorptionselement ein Wellrohr 9 aufweist, oder durch ein solches gebildet wird.

Die Figuren 3 bis 14 zeigen den Einsatz einer erfindungsgemäßen Gewindespindel 52 in Tauchspindelantrieben. In Figur 15 ist schematisch ein Rotationsspindelantrieb dargestellt, bei dem von dem Antriebsmotor 55 die Gewindespindel 52 drehend antreibbar ist. Die Spindelmutter 51 ist dabei gegen Rotation gesichert in einer Halterung 531 aufgenommen, die mit der Lenksäule verbunden und axial abgestützt werden kann, wie dies beispielsweise in der Figur 2 durch den Stellhebel 41 realisiert ist. In dem dargestellten Beispiel weist die Gewindespindel 52 ein Wellrohr 9 auf bzw. wird durch ein solches gebildet. Wie vorangehend geschildert, kann ein solches Wellrohr 9 eine axial eingeleitete Crashkraft F durch plastische Stauchung absorbieren.

Es ist weiterhin denkbar und möglich, die in den Beispielen gezeigten Energieabsorptionselemente und -vorrichtungen miteinander zu kombinieren, beispielsweise unterschiedliche Friktions- und/oder Deformationselemente.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 53, 63: Lagergehäuse
- 531: Halterung
- 54: Koppelabschnitt
- 541: Befestigungsbohrung
- 542: Befestigungsbolzen
- 55, 65: Stellmotor
- 56, 66: Schnecke
- 57: Kernelement
- 570: rohrförmiger Abschnitt (Rohrabschnitt)
- 571: Aufweitung (Deformationsmittel)
- 572: Öffnung
- 58: Gewindeelement (Gewindehülse)
- 580: Anschlagelement
- 581: Gewindezahn
- 59: Außengewinde
- 7: Getrieberad
- 71: Nabenelement
- 72: Verzahnung
- 73: Verbindungsabschnitt
- 74: Innengewinde
- 8: Energieabsorptionsvorrichtung
- 81: Biegestreifen
- 810: festes Ende
- 811: freies Ende
- 82: Betätigungselement
- 83: Führungselement
- 9: Wellrohr
- 91: Innengewinde
- 92: Kernrohr
- 93: Stützmantel
- 94: Kernspindel
- 95: Außengewinde
- 96: Gewindebuchse
- L: Längsachse
- H: Höhenrichtung
- G: Spindelachse
- F: Crashkraft
- D: Deformationsabschnitt

## Patentansprüche

1. Verstellantrieb (5) für eine Lenksäule (1) für ein Kraftfahrzeug, umfassend eine sich in Richtung einer Spindelachse (G) erstreckende Gewindespindel (52), die mit einem Außengewinde (59) in eine Spindelmutter (51) eingreift, und einen Antriebsmotor (55), der mit der Gewindespindel (52) oder der Spindelmutter (51) derart gekoppelt ist, dass die Spindelmutter (51) und die Gewindespindel (52) relativ zueinander drehend antreibbar sind, und eine Energieabsorptionsvorrichtung, die ausgebildet ist zur Absorption von in Richtung der Spindelachse (G) auf den Verstellantrieb (5) einwirkender kinetischer Energie,
wobei die Gewindespindel (52) die Energieabsorptionsvorrichtung (57, 58, 571, 8, 81,9) aufweist, und wobei die Gewindespindel (52) ein Wellrohr (9) aufweist,
**dadurch gekennzeichnet,**
**dass** das Wellrohr (9) das Außengewinde (59) aufweist.

2. Verstellantrieb nach Anspruch 1, **dadurch gekennzeichnet, dass** die Energieabsorptionsvorrichtung (57, 58, 571, 8,81,9) ein Deformationselement (58, 81, 9) und eine Friktionsvorrichtung (57, 58) aufweist.

3. Verstellantrieb nach einem der vorangehenden Ansprüche, **dadurch gekennzeichnet, dass** die Gewindespindel (52) zumindest einen Rohrabschnitt (57) aufweist.

4. Verstellantrieb nach einem der vorangehenden Ansprüche, **dadurch gekennzeichnet, dass** die Gewindespindel (52) ein Kernelement (57) und ein das Außengewinde (59) aufweisendes Gewindeelement (58) aufweist, wobei das Außengewinde (59) über die Energieabsorptionseinrichtung (57, 58) mit dem Kernelement (57) gekoppelt ist.

5. Verstellantrieb nach einem der vorangehenden Ansprüche, **dadurch gekennzeichnet, dass** das Kernelement (57) und/oder das Gewindeelement (58) ein Energieabsorptionselement (58, 81) aufweisen.

6. Verstellantrieb nach Anspruch 4 oder 5, **dadurch gekennzeichnet, dass** das Gewindeelement (58) als Gewindehülse ausgestaltet und auf dem Kernelement (57) in Richtung der Spindelachse (G) verschiebbar angeordnet ist, wobei eine Energieabsorptionsvorrichtung (57, 58, 571, 8) zwischen dem Gewindeelement (58) und dem Kernelement (57) angeordnet ist.

7. Verstellantrieb nach einem der Ansprüche 3 bis 6, **dadurch gekennzeichnet, dass** das Gewindeelement (58) und/oder das Kernelement (57) zumindest teilweise aus einem Metall und/oder einem Kunststoff ausgebildet ist.

8. Verstellantrieb nach Anspruch 1, **dadurch gekennzeichnet, dass** das Wellrohr (9) einen Innengewindeabschnitt (91) aufweist.

9. Verstellantrieb nach einem der vorangehenden Ansprüche, **dadurch gekennzeichnet, dass** das Wellrohr (9) einen Stützmantel (93) aus plastisch verformbarem Weichmaterial aufweist.

10. Verstellantrieb nach einem der vorangehenden Ansprüche, **dadurch gekennzeichnet, dass** das Wellrohr (9) koaxial auf einem Kernelement (57) angeordnet ist.

11. Verstellantrieb nach einem der vorangehenden Ansprüche, **dadurch gekennzeichnet, dass** das Wellrohr (9) in einem Endbereich an dem Kernelement (59) abgestützt ist.

12. Verstellantrieb nach einem der vorangehenden Ansprüche, **dadurch gekennzeichnet, dass** die Gewindespindel (52) ein Sollbruchelement (6) aufweist.

13. Verstellantrieb nach einem der vorangehenden Ansprüche, **dadurch gekennzeichnet, dass** die Gewindespindel (52) einen Koppelabschnitt (54) aufweist.

14. Verstellantrieb nach einem der vorangehenden Ansprüche, **dadurch gekennzeichnet, dass** die Spindelmutter (51) an einer Halterung (53, 531) in Richtung der Spindelachse (G) abgestützt ist.

15. Verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) drehbar gelagert ist, und die einen Verstellantrieb (5) aufweist, der eine mit einem Außengewinde (59) in eine Spindelmutter (51) eingreifende Gewindespindel (52) und einen Antriebsmotor (55) umfasst, der mit der Gewindespindel (52) oder der Spindelmutter (51) derart gekoppelt ist, dass die Gewindespindel (52) und die Spindelmutter (51) relativ drehend zueinander antreibbar sind, wobei der Verstellantrieb (5) zumindest einen Koppelabschnitt (54) aufweist, und mit der Trageinheit (2) und/oder der Stelleinheit (3) verbunden ist,
**dadurch gekennzeichnet,**
**dass** die Gewindespindel (52) ausgebildet ist gemäß einem der Ansprüche 1 bis 14.

## Claims

1. Adjustment drive (5) for a steering column (1) for a motor vehicle, comprising a threaded spindle (52) which extends in the direction of a spindle axis (G) and engages with an external thread (59) in a spindle nut (51), and a drive motor (55) which is coupled to the threaded spindle (52) or the spindle nut (51) in such a way that the spindle nut (51) and the threaded spindle (52) can be driven in rotation relative to one another, and an energy absorption device which is designed to absorb kinetic energy acting on the adjustment drive (5) in the direction of the spindle axis (G),
wherein the threaded spindle (52) has the energy absorption device (57, 58, 571, 8, 81, 9), and wherein the threaded spindle (52) has a corrugated tube (9),
**characterized in**
**in that** the corrugated tube (9) comprises the external thread (59).

2. Adjustment drive according to claim 1, **characterized in that** the energy absorption device (57, 58, 571, 8, 81, 9) comprises a deformation element (58, 81, 9) and a friction device (57, 58).

3. Adjusting drive according to one of the preceding claims, **characterized in that** the threaded spindle (52) has at least one tube section (57).

4. Adjusting drive according to one of the preceding claims, **characterized in that** the threaded spindle (52) has a core element (57) and a threaded element (58) having the external thread (59), the external thread (59) being coupled to the core element (57) via the energy absorption device (57, 58).

5. Adjustment drive according to one of the preceding claims, **characterized in that** the core element (57) and/or the threaded element (58) comprise an energy absorption element (58, 81).

6. Adjustment drive according to claim 4 or 5, **characterized in that** the threaded element (58) is designed as a threaded sleeve and is arranged on the core element (57) so as to be displaceable in the direction of the spindle axis (G), an energy absorption device (57, 58, 571, 8) being arranged between the threaded element (58) and the core element (57).

7. Adjustment drive according to one of claims 3 to 6, **characterized in that** the threaded element (58) and/or the core element (57) is formed at least partially from a metal and/or a plastic.

8. Adjustment drive according to claim 1, **characterized in that** the corrugated tube (9) has an internally threaded section (91).

9. Adjusting drive according to one of the preceding claims, **characterized in that** the corrugated tube (9) has a supporting jacket (93) made of plastically deformable soft material.

10. Adjusting drive according to one of the preceding claims, **characterized in that** the corrugated tube (9) is arranged coaxially on a core element (57).

11. Adjusting drive according to one of the preceding claims, **characterized in that** the corrugated tube (9) is supported in an end region on the core element (59).

12. Adjusting drive according to one of the preceding claims, **characterized in that** the threaded spindle (52) has a predetermined breaking element (6).

13. Adjusting drive according to one of the preceding claims, **characterized in that** the threaded spindle (52) has a coupling section (54).

14. Adjusting drive according to one of the preceding claims, **characterized in that** the spindle nut (51) is supported on a holder (53, 531) in the direction of the spindle axis (G).

15. Adjustable steering column (1) for a motor vehicle, with a support unit (2) which can be attached to a vehicle body and by which an adjusting unit (3) is held, in which a steering spindle (32) is rotatably mounted, and which has an adjusting drive (5) which comprises a threaded spindle (52) engaging with an external thread (59) in a spindle nut (51) and a drive motor (55), which is coupled to the threaded spindle (52) or the spindle nut (51) in such a way that the threaded spindle (52) and the spindle nut (51) can be driven in rotation relative to one another, the adjusting drive (5) having at least one coupling section (54) and being connected to the support unit (2) and/or the adjusting unit (3),
**characterized in**
**in that** the threaded spindle (52) is designed in accordance with one of claims 1 to 14.

## Revendications

1. Entraînement de réglage (5) pour une colonne de direction (1) d'un véhicule automobile, comprenant une broche filetée (52) qui s'étend dans la direction d'un axe de broche (G) et s'engage dans un filetage extérieur (59) d'un écrou de broche (51), et un moteur d'entraînement (55) couplé à la broche filetée (52) ou à l'écrou de broche (51) de manière à ce que l'écrou de broche (51) et la broche filetée (52) puissent être entrainés en rotation l'un par rapport à l'autre, et un dispositif d'absorption d'énergie conçu pour absorber l'énergie cinétique agissant sur l'entraînement de réglage (5) dans la direction de l'axe de broche (G),
dans lequel la tige filetée (52) comporte le dispositif d'absorption d'énergie (57, 58, 571, 8, 81, 9), et dans lequel la tige filetée (52) comporte un tube ondulé (9),
**caractérisé en**
en ce que le tube ondulé (9) comprend le filetage extérieur (59).

2. Entraînement de réglage selon la revendication 1, **caractérisé par le fait que** le dispositif d'absorption d'énergie (57, 58, 571, 8, 81, 9) comprend un élément de déformation (58, 81, 9) et un dispositif de friction (57, 58).

3. Entraînement de réglage selon l'une des revendications précédentes, **caractérisé par le fait que** la tige filetée (52) comporte au moins une section tubulaire (57).

4. Entraînement de réglage selon l'une des revendications précédentes, **caractérisé par le fait que** la broche filetée (52) comporte un élément central (57) et un élément fileté (58) doté d'un filetage extérieur (59), le filetage extérieur (59) étant couplé à l'élément central (57) par l'intermédiaire du dispositif d'absorption d'énergie (57, 58).

5. Entraînement de réglage selon l'une des revendications précédentes, **caractérisée par le fait que** l'élément central (57) et/ou l'élément fileté (58) comprennent un élément d'absorption d'énergie (58, 81).

6. Entraînement de réglage selon la revendication 4 ou 5, **caractérisé par le fait que** l'élément fileté (58) est conçu comme un manchon fileté et est disposé sur l'élément central (57) de manière à pouvoir être déplacé dans la direction de l'axe de la broche (G), un dispositif d'absorption d'énergie (57, 58, 571, 8) étant disposé entre l'élément fileté (58) et l'élément central (57).

7. Entraînement de réglage selon l'une des revendications 3 à 6, **caractérisée par le fait que** l'élément fileté (58) et/ou l'élément central (57) est formé au moins partiellement d'un métal et/ou d'une matière plastique.

8. Entraînement de réglage selon la revendication 1, **caractérisé par le fait que** le tube ondulé (9) comporte une section filetée intérieure (91).

9. Entraînement de réglage selon l'une des revendications précédentes, **caractérisé par le fait que** le tube ondulé (9) possède une enveloppe de support (93) en matériau souple plastiquement déformable.

10. Entraînement de réglage selon l'une des revendications précédentes, **caractérisé par le fait que** le tube ondulé (9) est disposé coaxialement sur un élément central (57).

11. Entraînement de réglage selon l'une des revendications précédentes, **caractérisé par le fait que** le tube ondulé (9) est supporté dans une zone d'extrémité sur l'élément central (59).

12. Entraînement de réglage selon l'une des revendications précédentes, **caractérisé par le fait que** la tige filetée (52) comporte un élément de rupture prédéterminé (6).

13. Entraînement de réglage selon l'une des revendications précédentes, **caractérisé par le fait que** la tige filetée (52) comporte une section de couplage (54).

14. Entraînement de réglage selon l'une des revendications précédentes, **caractérisé par le fait que** l'écrou de la broche (51) est supporté sur un support (53, 531) dans la direction de l'axe de la broche (G).

15. Colonne de direction réglable (1) pour un véhicule automobile, avec une unité de support (2) qui peut être fixée à la carrosserie du véhicule et par laquelle une unité de réglage (3) est maintenue, dans laquelle une broche de direction (32) est montée rotative, et qui a un entraînement de réglage (5) qui comprend une broche filetée (52) s'engageant dans un filetage extérieur (59) dans un écrou de broche (51) et un moteur d'entraînement (55), qui est couplé à la broche filetée (52) ou à l'écrou de broche (51) de manière à ce que la broche filetée (52) et l'écrou de broche (51) puissent être entraînés en rotation l'un par rapport à l'autre, l'entraînement de réglage (5) ayant au moins une section de couplage (54) et étant relié à l'unité de support (2) et/ou à l'unité de réglage (3),
caractérisé en
en ce que la tige filetée (52) est conçue conformément à l'une des revendications 1 à 14.
